# EUROPEAN PATENT APPLICATION

(11) **EP 2 348 791 A2**
(43) Date of publication of application: **27.07.2011**
(21) Application number: 10007786.6
(22) Date of filing: 27.07.2010
(51) Int. Cl.: H05B 33/08

(54) **Led lighting device capable of changing illumination color**

(30) Priority: 22.01.2010 US 691954
(71) Applicant: Lin, Chiu-Min, Taoyuan County (TW)
(72) Inventor: Lin, Chiu-Min, Taoyuan County (TW)
(74) Representative: Sonn & Partner Patentanwälte

(57) **Abstract**

A LED lighting device capable of changing illumination color has an adjusting circuit (10), a bridge rectifier (20) and multiple LED modules (50a, 50b, 50c). The adjusting circuit (10) is connected to a light regulator (102) and produces a regulated input voltage (Vin) in response to the output voltage of the light regulator (102). The bridge rectifier (20) converts the regulated input voltage (Vin) to a DC voltage (Vout) to be applied to drive at least one of the LED modules (50a,50b,50c). At least one of the LED modules (50a, 50b, 50c) receives the DC voltage varies its illuminating intensity. Since the illuminating intensity of at least one of the LED modules (50a, 50b, 50c) is adjustable, the different colored lights emitted from all the LED modules (50a, 50b, 50c) are mixed to produce a desired color.

## Description

### 1. Field of the Invention

The present invention relates to a LED lighting device, especially to a LED device capable of changing illumination color.

### 2. Description of the Related Art

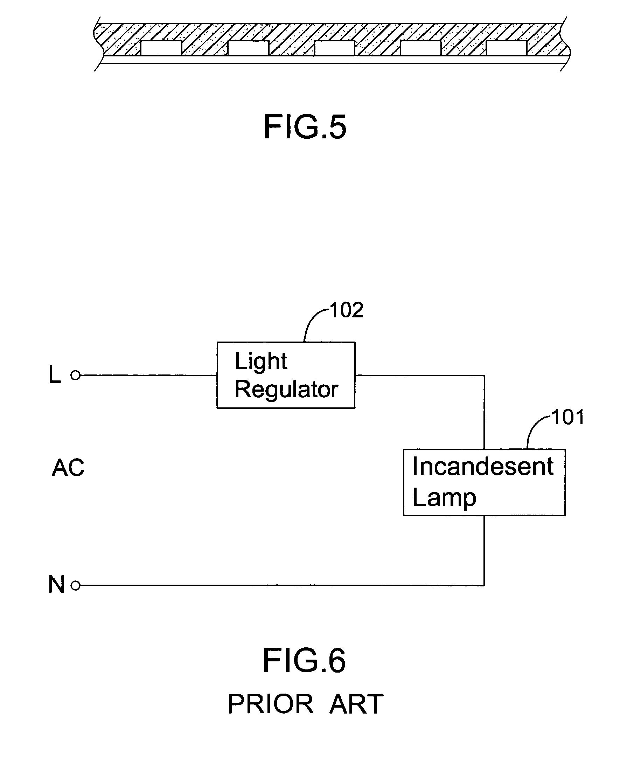

Light adjustable lamps are often used to provide comfortable ambiance. With reference to Fig. 5, a conventional light adjustable lamp mainly includes an incandescent lamp (101) and a light regulator (102) connected in series. The light regulator (102) is composed of silicon-controlled elements such as DIAC (diode for alternating current) and TRIAC (triode for alternating current). By changing a trigging voltage applied to the silicon-controlled element, the conduction angle of the silicon-controlled element is adjusted to control the AC voltage across the incandescent lamp (101) and accordingly regulate the brightness of the incandescent lamp (101) to a desired level.

More and more LED-based lamps are used as lighting equipment and are replacing conventional incandescent lamps for saving energy and reducing power consumption. The LED-based lamps are driven by low DC voltages. However, the light regulator (102) is unable to directly regulate the DC voltage and cannot adjust the brightness of the LED-based lamps. Therefore, users have to use particular regulators to substitute the existed light regulators and almost abandon all original related control circuits.

Further, after the LED-based lamps are fabricated, the colors of the light emitted by the conventional LED-based lamps are limited and not allowed to adjust by the user to create a particular colored light.

To overcome the shortcomings, the present invention provides a brightness adjusting circuit for an LED lamp to mitigate or obviate the aforementioned problems.

An objective of the present invention is to provide a LED lighting device capable of changing illumination color according to user's requirements. To change the illumination color, the intensity of at least one color emitted from a LED module is adjustable. Therefore, a desired colored light is produced by mixing different colors of the different LED modules.

The LED lighting device comprising a first lighting unit and a second lighting unit. The first lighting unit comprises a light regulator, an adjusting circuit, a bridge rectifier, a current limiting resistor and a first LED module. The second lighting unit is connected to the first lighting unit in parallel and comprises multiple LEDs with different colors to the LEDs of the first lighting unit.

The second lighting unit may provide a constant illuminating brightness or may have multiple lighting modules with the same circuit configuration as the first lighting unit capable of adjusting brightness.

When the brightness of either first LED lighting unit or the second LED lighting unit is adjusted to change the percentage of a light component, the mixing result of different colors of lights will be affected. Therefore, the LED lighting device is able to produce a desired mixed light.

Other objectives, advantages and novel features of the invention will become more apparent from the following detailed description when taken in conjunction with the accompanying drawings.

In the drawings:
Fig. 1 is a circuit diagram of a LED lighting device in accordance with a first embodiment of the present invention;
Fig. 2 is a circuit diagram of a LED lighting device in accordance with a second embodiment of the present invention;
Fig. 3 is a circuit diagram of a LED lighting device in accordance with a third embodiment of the present invention;
Fig. 4 is a circuit diagram of a LED lighting device in accordance with a fourth embodiment of the present invention;
Fig. 5 is a partial cross section view of a flexible light string of a LED lighting device in accordance with the present invention; and
Fig. 6 is a block circuit diagram of a conventional light adjustable lamp.

A LED lighting device capable of adjusting illumination color of the present invention at least comprises a first lighting unit 1 and a second lighting unit 2, wherein the second lighting unit 2 comprises multiple LEDs with different colors to that of the first lighting unit 1. The second lighting unit 2 may provide a constant illuminating brightness or may have multiple lighting modules that have the same configuration as the first lighting unit 1 and are capable of adjusting illuminating brightness respectively.

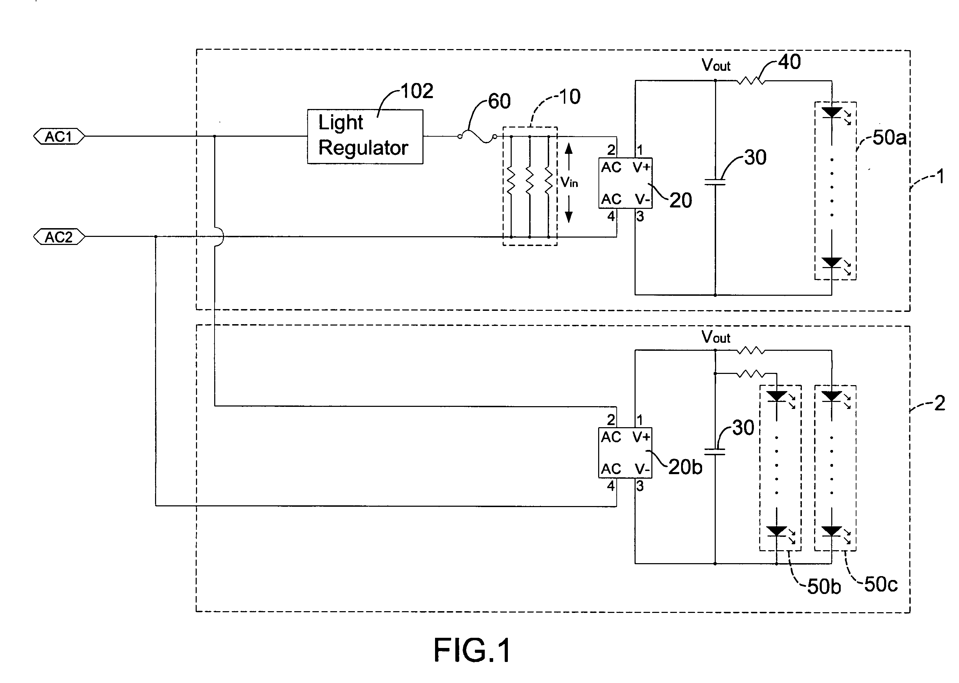

With reference to Fig. 1, the fist lighting unit 1 in this embodiment comprises a light regulator 102, an adjusting circuit 10, a bridge rectifier 20, a filtering circuit 30, a current limiting resistor 40, a first LED module 50a and an optional fuse 60.

The light regulator 102 is connected to a first AC wire AC1 and has an output terminal. The light regulator 102 comprises silicon-controlled elements such as a DIAC (diode for alternating current) or a TRIAC (triode for alternating current. By changing a trigging voltage applied to the silicon-controlled element, the conduction angle of the silicon-controlled element is adjusted to control the AC voltage output from the light regulator 102.

The adjusting circuit 10 is connected between the output terminal of the light regulator 102 and a second AC wire AC2, and comprises multiple resistors connected in parallel. Preferably, all resistors have the same resistance value. A regulated input voltage Vin is generated across the adjusting circuit 10.

The bridge rectifier 20 has a first input terminal, a second input terminal, a positive output terminal V+ and a negative output terminal V-. The first and second input terminals are respectively connected to the output terminal of the light regulator 102 and the second AC wire AC2 to receive the regulated input voltage Vin. The bridge rectifier 20 converts the regulated input voltage Vin to a DC voltage Vout being output from the positive and negative output terminals V+, V-.

The filter capacitor 30 is connected between the positive and negative output terminals V+, V- of the bridge rectifier 20 to remove or reduce harmonics or noises of the DC voltage Vout.

The one current limiting resistor 40 is connected between the positive output terminal V+ of the bridge rectifier 20 and a corresponding first LED module 50a to limit a current flowing through the corresponding first LED module 50a.

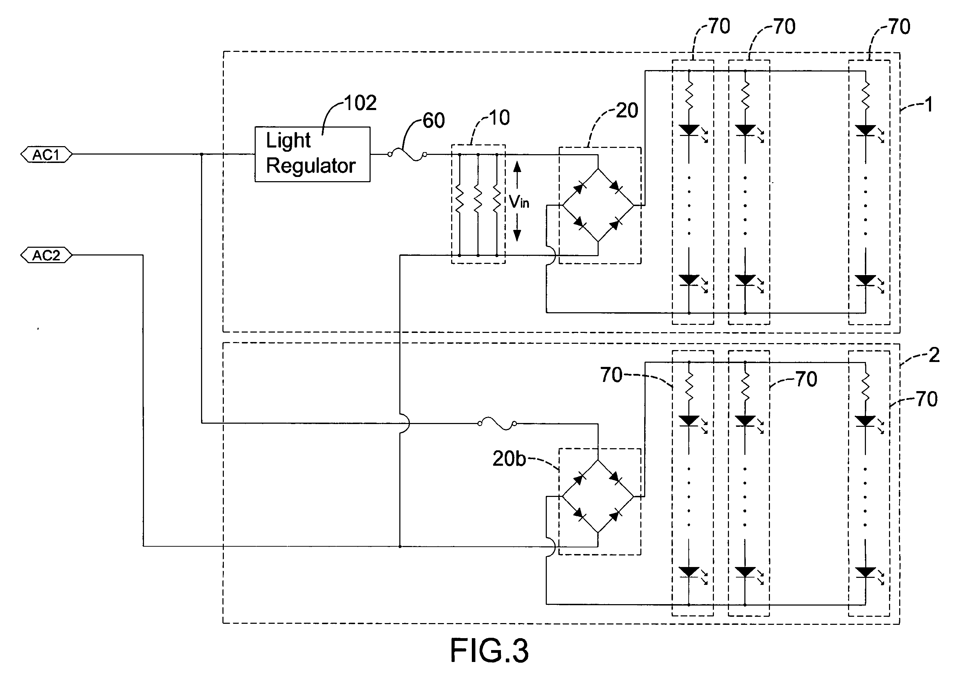

The first LED module 50a comprises multiple LEDs with the same colors connected in series and has a positive terminal and a negative terminal. The positive terminal is connected to a corresponding current limiting resistor 40 and the negative terminal is connected to the negative output terminal V- of the bridge rectifier 20. With reference to Fig. 3, the first lighting unit 1 may further have multiple first LED modules 50a connected in parallel.

The fuse 60 is connected between the output terminal of the light regulator 102 and the adjusting circuit 10 to provide an over-current protection.

The second lighting unit 2 is connected to the first lighting unit 1 in parallel between the two AC wires AC1 and AC2. The second lighting unit 2 in the first embodiment provides a constant illuminating brightness and has a second bridge rectifier 20b and at least one second LED modules 50b and 50c.

The second bridge rectifier 20b has a first and a second input terminals respectively connected to the two AC wires AC1 and AC2 and further has a positive output terminal V+ and a negative output terminal V-. Each of the at least one second LED modules 50b and 50c is connected between the positive and the negative output terminals V+ and V- and comprises multiple LEDs having different color to the LEDs of the first LED module 50a.

When a user adjusts the light regulator 102, the regulated input voltage Vin across the adjusting circuit 10 is changed accordingly. As the DC voltage Vout produced by the bridge rectifier 20 of the first lighting unit 1 varies, the illuminating brightness of the first LED module 50a is changed since the driving current flowing through the first LED module 50a is proportional to the DC voltage Vout. The different colored lights from the first LED module 50a and from the second LED modules 50b and 50c are mixed to produce a desired color. For example, the LEDs of the first LED module 50 can emit red light and the second LED modules 50b and 50c can emit green and blue lights. When the intensity of red light is changed, the original ratio of the red component existing in the emitted light of the LED lighting device is affected. Therefore, the mixing result of lights of the LED modules 50, 50b and 50c is changed to produce a desired color.

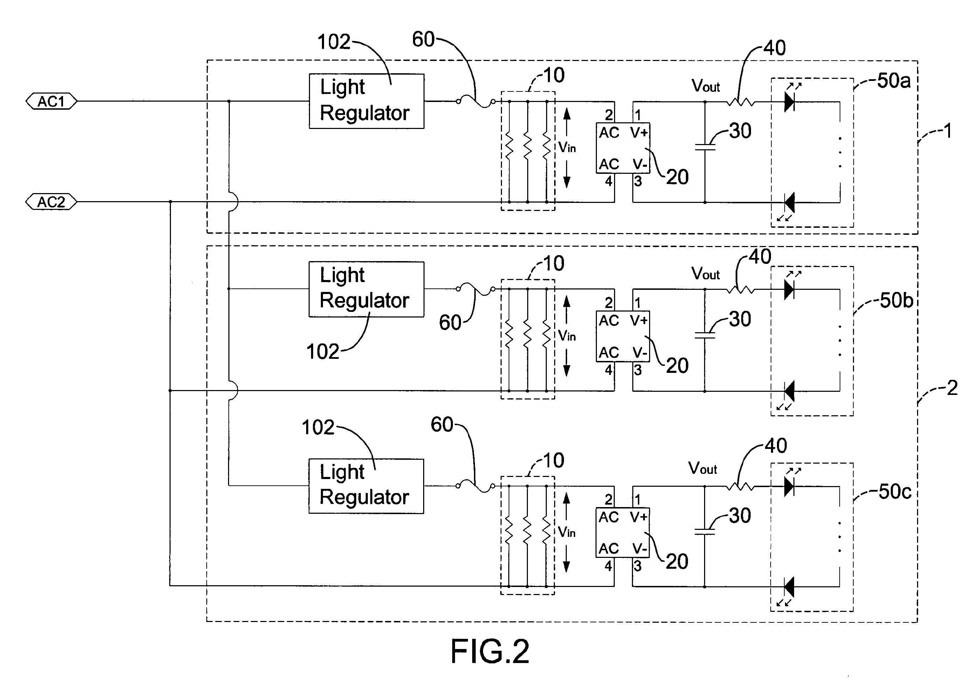

With further reference to Fig. 2, the second lighting unit 2 in the second embodiment comprises multiple lighting modules. Each of the multiple lighting modules has the same circuit configuration as the first lighting unit 1. The LED modules 50b and 50c of different lighting modules generate different colored lights. If the first LED module 50a and the second LED modules 50b and 50c emit different colors respectively, such as the three primary colors red, green and blue, the intensity change of any light color will result in a variation of the mixed result.

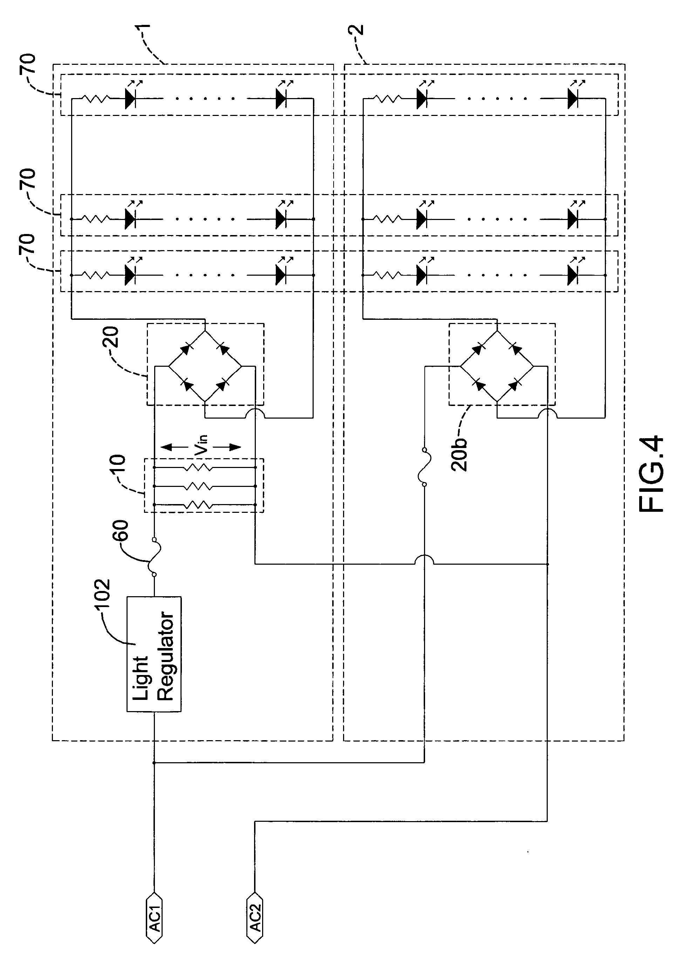

With further reference to Figs. 3 and 5, the first LED module 50a and the second LED modules 50b and 50c can be manufactured as flexible light strings 70 respectively. To manufacture each flexible light string 70, the LEDs of the LED module 50a are mounted on a flexible printed circuit board and then encapsulated by a soft transparent or translucent protection layer. The flexible light string is flexible, cuttable and waterproof. Each LED module 50a, 50b or 50c may be fabricated as a single flexible light sting 70 as shown in Fig. 3. Alternatively, with reference to Fig. 4, several LED modules of the first lighting unit 1 and the second lighting unit 2 may be manufactured in the same flexible light string 70.

The flexible light strings 70 is cuttable and can be re-connected in parallel or series according to the user's requirements. Since the flexible light strings 70 can be deformed and mounted on uneven surfaces, the flexible light strings 70 are ideal for many applications.

## Claims

1. A LED lighting device capable of changing illumination color, **characterized in that** the LED lighting device comprises a first lighting unit (1) and a second lighting unit (2),
wherein the first lighting unit (1) comprises:
a light regulator (102) connected to a first AC wire (AC1) and having an output terminal;
an adjusting circuit (10) connected to the output terminal of the light regulator (102) and a second AC wire (AC2), and outputting a regulated input voltage (Vin);
a bridge rectifier (20) having a first input terminal, a second input terminal, a positive output terminal and a negative output terminal, the first and second input terminals respectively connected to the output terminal of the light regulator (102) and the second AC wire (AC2) to convert the regulated input voltage (Vin) to a DC voltage (Vout);
a current limiting resistor (40) connected to the positive output terminal of the bridge rectifier (20);
a first LED module (50a) comprising multiple LEDs connected in series and having
a positive terminal connected to the current limiting resistor (40); and
a negative terminal connected to the negative output terminal of the bridge rectifier (20);
wherein the second lighting unit (2) is connected to the first lighting unit (1) in parallel between the first AC wire (AC 1) and the second AC wire (AC2), and comprises multiple LEDs with different colors to the LEDs of the first lighting unit (1).

2. The LED lighting device as claimed in claim 1, wherein the second lighting unit (2) comprises:
a second bridge rectifier (20b) having a first input terminal, a second input terminal, a positive output terminal and a negative output terminal, the first and second input terminals respectively connected to the first AC wire (AC 1) and the second AC wire (AC2);
a second LED module (50b, 50c) connected to the positive output terminal and the negative output terminal of the second bridge rectifier (20b), and having the multiple LEDs with different colors to the LEDs of the first lighting unit (1).

3. The LED lighting device as claimed in claim 1, wherein the second lighting unit (2) comprises multiple lighting modules and each of the lighting modules has:
a light regulator (102) connected to a first AC wire (AC1) and having an output terminal;
an adjusting circuit (10) connected to the output terminal of the light regulator (102) and a second AC wire (AC2), and outputting a regulated input voltage (Vin);
a bridge rectifier (20) having a first input terminal, a second input terminal, a positive output terminal and a negative output terminal, the first and second input terminals respectively connected to the output terminal of the light regulator (102) and the second AC wire (AC2) to convert the regulated input voltage (Vin) to a DC voltage (Vout);
a current limiting resistor (40) connected to the positive output terminal of the bridge rectifier (20);
a second LED module (50b, 50c) comprising multiple LEDs connected in series and having
a positive terminal connected to the current limiting resistor (40); and
a negative terminal connected to the negative output terminal of the bridge rectifier (20);
wherein the multiple second LED modules (50b, 50c) of the multiple lighting modules emit different colors respectively.

4. The LED lighting device as claimed in claim 2 or 3, wherein the adjusting circuit (10) of the first lighting unit (1) comprises multiple resistors connected in parallel.

5. The LED lighting device as claimed in claim 4, wherein the multiple resistors of the adjusting circuit (10) have the same resistance value.

6. The LED lighting device as claimed in claim 3, the first lighting unit (1) further comprises a filtering capacitor connected between the positive output terminal and the negative output terminal of the bridge rectifier.

7. The LED lighting device as claimed in claim 6, each of the multiple adjusting circuits of the lighting modules comprises multiple resistors connected in parallel.

8. The LED lighting device as claimed in claim 3, wherein the multiple resistors of each adjusting circuit (10) of the second lighting unit (2) have the same resistance value.

9. The LED lighting device as claimed in claim 2 or 3, wherein the first LED module (50a) of the first lighting unit (1) is a flexible light string.

10. The LED lighting device as claimed in claim 9, wherein the flexible light string comprises:
a flexible printed circuit board;
the multiple LEDs mounted on the flexible printed circuit board; and
a soft protection layer encapsulating the flexible printed circuit board and the multiple LEDs.

11. The LED lighting device as claimed in claim 2, wherein the second LED module (50b) of the second lighting unit (2) is a flexible light string.

12. The LED lighting device as claimed in claim 3, wherein each second LED module (50b, 50c) of the second lighting unit (2) is a flexible light string.

13. The LED lighting device as claimed in claim 11 or 12, wherein the flexible light string comprises:
a flexible printed circuit board;
the multiple LEDs mounted on the flexible printed circuit board; and
a soft protection layer encapsulating the flexible printed circuit board and the multiple LEDs.

14. The LED lighting device as claimed in claim 2, wherein the first LED module (50a) of the first lighting unit (1) and the second LED module (50b) of the second lighting unit (2) are manufactured as a flexible light string.

15. The LED lighting device as claimed in claim 3, wherein the first LED module (50a) of the first lighting unit (1) and at least one of the second LED modules (50b) of the second lighting unit (2) are manufactured as a flexible light string.
